# EUROPEAN PATENT SPECIFICATION

(11) **EP 4 398 703 B1**
(45) Date of publication and mention of the grant of the patent: **13.05.2026**
(21) Application number: 21827578.2
(22) Date of filing: 06.12.2021
(51) Int. Cl.: A01B 33/02, A01B 33/08

(54) **REAR TINE TILLER**
MOTORKULTIVATOR
MOTOCULTEUR

(30) Priority: 07.09.2021 US 202163241289 P
(43) Date of publication of application: 17.07.2024
(73) Proprietor: Techtronic Cordless GP, Anderson, SC 29621 (US)
(72) Inventor: MOULD, Keegen Riley, Pendleton, South Carolina 29670 (US); MCCALLUM, John Eugene, Iva, South Carolina 29655-9008 (US); MASON, Philip Edward, Greenville, South Carolina 29605 (US); DIXON, Eli Benjamin, Greenville, South Carolina 29617 (US); MOEHN, Matthew Gerard, Simpsonville, South Carolina 29681 (US); LAMBERT, Matt, Seneca, South Carolina 29672 (US); YANG, Yang, Dongguan, Guangdong (CN); HUANG, Jie, Dongguan, Guangdong (CN); LIN, Xiaotao, Dongguan, Guangdong (CN); LV, Yizhong, Dongguan, Guangdong (CN)
(74) Representative: Zimmermann & Partner Patentanwälte mbB
(86) International application number: PCT/CN2021/135622
(87) International publication number: WO 2023/035431

(56) References cited:
- CN-U- 205 389 330
- JP-A- 2011 205 909
- JP-A- 2013 009 600

## Description

### FIELD

The present disclosure relates generally to tillers, and more particularly to rear tine tillers.

### BACKGROUND

Tillers are generally utilized to till ground, typically for gardening and yard repair operations. Traditionally, tilling was performed by hand, with an operator manually breaking apart ground using manual tools, such as shovels, hoes, and tined implements which the operator can use to manually break apart the soil. Over time, gas powered tillers have been introduced which utilize powered tines to break apart soil. However, these gas-powered tillers suffer from several disadvantages which make them difficult to operate and inconvenient for the operator. JP2011205909A relates to a small, lightweight electric tiller driven by an electric motor, which has a simple structure and operation, and allows stable tilling work and operation. According to the document, a known configuration is one in which the wheel axles of the running wheels mounted on the front of the vehicle body and the rotor shaft of the tillage rotor mounted on the rear of the vehicle are mounted on the lower end of a transmission tube that intersects at a right angle from front to back, and are driven by a single electric motor mounted on the upper intersecting end of the transmission tube. The document relates to an electric tiller configuration characterized in that a tilling rotor is arranged behind the running wheels of the vehicle body, the running wheels are driven by a variable speed motor that can be operated to change speeds, and the tilling rotor is driven by a fixed speed motor. The disclosure further describes a traveling transmission cylinder having a variable speed motor at its frond end, an axle of the traveling wheels mounted at its rear end, and a wheel interlocking shaft that links the variable speed motor and the axle, and a tilling transmission cylinder having a fixed speed motor at its front end, a rotor shaft of the tilling motor mounted at its rear end, and a tilling interlocking shaft that links the fixed speed motor and the rotor shaft, which are arranged at an inclination forward and backward relative to the vehicle body. JP2013009600A relates to an electric tiller that is equipped with a rotary tiller consisting of a tiller axle with multiple tiller tines attached to the circumferential surface at the front and rear of the lower part of the machine base, and running wheels consisting of a pair of wheels attached to the axle, with a battery mounted on the machine base and a control handle extending upward from the end of the machine base, and that drives the rotary tiller and running wheels via a motor using power from the battery. More specifically, the motor is equipped with a tiller axle drive motor that drives the tiller axle and an axle drive motor that drives the axle, and the tiller axle drive motor forms a tiller drive unit that is integral with the tiller axle, and the tiller drive unit is equipped with a rotation direction change means that changes the rotation direction of the tiller axle. CN205389330U describes a remote control electric micro tillage machine.

Accordingly, improved tillers are desired in the art. In particular, tillers which offer easier use and operation would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a tiller is provided. The tiller includes a walking element configured to move the tiller; a tine rotatable about a rotational axis; a first motor configured to drive the walking element to move the tiller; and a counterweight, wherein the tine is disposed on a first side of the tiller and wherein the counterweight is disposed on a second side of the tiller opposite the first side.

In accordance with another embodiment, a tiller is provided. The tiller includes a plurality of wheels; a tine rotatable about a rotational axis; a first motor configured to rotate at least one of the plurality of wheels to move the tiller; and a second motor configured to drive rotation of the tine about the axis, wherein the first and second motors operate independently.

In accordance with another embodiment, a tiller is provided. The tiller includes a walking element configured to move the tiller; a tine rotatable about a rotational axis; a motor configured to drive the tine about the rotational axis; and a counterweight, wherein the tine is disposed on a first side of the tiller and wherein the counterweight is disposed on a second side of the tiller opposite the first side, and wherein the first motor is configured to be powered by an energy storage device.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a perspective view of a tiller in accordance with an exemplary embodiment of the present disclosure;
FIG. 2 is a side view of the tiller in accordance with an exemplary embodiment of the present disclosure;
FIG. 3 is a side view of the tiller illustrating an adjustable handle in accordance with an exemplary embodiment of the present disclosure;
FIG. 4A is a partial perspective view of a locking mechanism of the tiller in accordance with an exemplary embodiment of the present disclosure;
FIG. 4B is a partial perspective view of the locking mechanism in accordance with another exemplary embodiment of the present disclosure;
FIG. 5 is a front perspective view of a counterweight of the tiller in accordance with an exemplary embodiment of the present disclosure;
FIG. 6 is a side view of the counterweight in accordance with an exemplary embodiment of the present disclosure;
FIG. 7 is a top view of the counterweight in accordance with an exemplary embodiment of the present disclosure;
FIG. 8 is a side view of a portion of the tiller including a battery receiving area in accordance with an exemplary embodiment of the present disclosure;
FIG. 9 is a top view of the battery receiving area in accordance with an exemplary embodiment of the present disclosure;
FIG. 10 is a rear view of a handle of the tiller in accordance with an exemplary embodiment of the present disclosure;
FIG. 11 is a close up view of control elements disposed on a handle of the tiller in accordance with an exemplary embodiment of the present disclosure;
FIG. 12 is a bottom front perspective view of a drive element of the tiller in accordance with an exemplary embodiment of the present disclosure;
FIG. 13 is a side view of a portion of the tiller in accordance with an exemplary embodiment of the present disclosure;
FIG. 14 is a cross-sectional view of a portion of the tiller in accordance with an exemplary embodiment of the present disclosure;
FIG. 15 is a perspective view of a vent of a cooling system of the tiller in accordance with an exemplary embodiment of the present disclosure;
FIG. 16 is a perspective view of a second motor which drives tines of the tiller in accordance with an exemplary embodiment of the present disclosure;
FIG. 17 is a cross-sectional view of a cooling system in which air travels relative to the tiller in accordance with an exemplary embodiment of the present disclosure;
FIG. 18 is a method of operating a tiller in accordance with an exemplary embodiment of the present disclosure; and
FIG. 19 is a perspective view of a tiller in accordance with an exemplary embodiment of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope of the invention which is defined by the appended claims. For instance, features illustrated or described as part of one embodiment can be used with another embodiment to yield a still further embodiment. Thus, it is intended that the present disclosure covers such modifications and variations as come within the scope of the appended claims. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, tillers described in accordance with embodiments herein can utilize electric motors to move, i.e., drive, the tiller and rotate a tine having a plurality of cutting surfaces which extend into the ground to break apart the soil. In particular, the tiller can utilize a first electric motor to move the tiller and a second electric motor to rotate the tines. The first electric motor may be disposed between a walking element of the tiller, e.g., between first and second wheels of the tiller, while the second electric motor can be disposed at a different location along the tiller, such as, e.g., above a tine shield covering the rotating tine. The first and second motors may be operated independently such that the operator can selectively adjust one of the first and second motors without causing a change to the other of the first or second motor.

In accordance with an embodiment, the tiller can include a cooling system configured to cool at least some components of the tiller, such as, e.g., a circuit board of the tiller, the second motor, or the like. In certain instances, the cooling system can draw air into the tiller and pass the air over the components, venting the air to an external environment through a vent.

A ballast, in the form of a counterweight, may be utilized on the tiller to allow an operator to counterbalance the weight and forces acting on the tines, if needed or desirable. In this regard, the tiller may be more easily managed during use. The counterweight may be removable from a bulbar. The counterweight may further include a recess which allows the operator to more precisely adjust weight balance of the tiller using weighting materials, such as rocks, sand or dirt, or even store items on the tiller. The recess may be selectively closed by a cover which the operator can utilize to prevent ingress of unwanted debris into the recess during use. The recess may be void during transport of the tiller and filled, including partially filled, with weighting materials during use.

The tiller can include a handle which the operator may grasp during use. The handle of the tiller may be adjustable between a plurality of different angular positions, such as between at least two angular positions, such as at least three angular positions. The handle may be locked in these various positions using a locking mechanism which interfaces with one or more slots disposed along the tiller frame. When stored, the handle may be reconfigured to a storage orientation which may position the handle within an areal footprint of the tiller to minimize storage size.

User controls may be positioned along the handle and allow an operator to adjust a number of operating characteristics of the tiller. These user controls may allow the operator to adjust the drive speed of the tiller between an off position and a maximum driving speed, quickly allow the operator to engage a transportation mode where the tines stop rotating and the drive speed reaches a predetermined speed, a power ON/OFF interface, a reverse mode where the tines stop rotating and the wheels can run in reverse, or the like. As will be described in more detail, the user controls may be readily disposed at the user's fingertips to allow for quick and precise control of the tiller. A bail may be incorporated into the handle to prevent accidental operation of the tiller when the operator is not present.

These and other advantages of the tiller will become clear to those of ordinary skill in the art after reading the entire description in view of the accompanying figures.

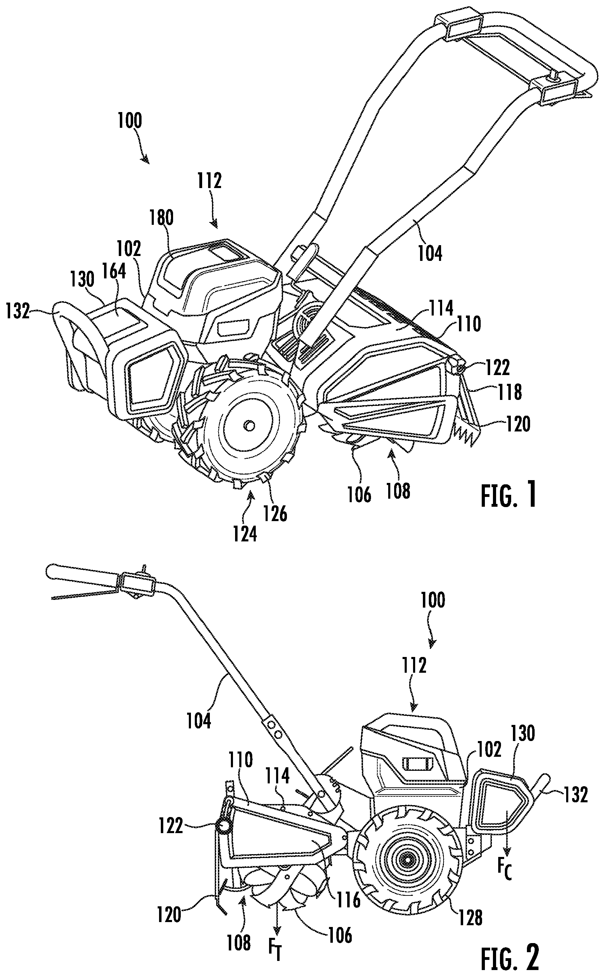

Referring to the Figures, FIG. 1 illustrates a perspective view of a tiller 100 in accordance with an exemplary embodiment. FIG. 2 illustrates a side view of the tiller 100 in accordance with an exemplary embodiment. The tiller 100 generally includes a body 102, a handle 104 extending rearwardly from the body 102, tines 106 disposed within a volume 108 of a tine shield 110, and a battery receiving area 112. As illustrated, the tines 106 are disposed at a rear end of the body 102. At least a portion of the tines 106 may be disposed below a portion of the handle 104. During use, the operator may stand behind the tines 106, holding on to the handle 104.

The tine shield 110 may include a cover extending around at least a portion of the tines 106. The tine shield 110 can include, for example, a top cover 114, opposite outer sides 116 and 118, and a rear shield 120. In certain instances, the tine shield 110 can further include inner panels, such as inner sides. The inner panels may not be height-adjustable. The tine shield 110, and more particularly, the rear shield 120 can prevent the operator from becoming entangled in the tines 106. The rear shield 120 may also flatten the tilled soil into a neat row. The rear shield 120 may be pivotably attached to the tine shield 110 such that the rear shield 120 can deflect during usage to accommodate different underlying ground surfaces and structures while maintaining protection against operator entanglement. The rear shield 120 may be coupled to the tine shield 110 by a connector 122. The connector 122 can be adjustable, allowing the operator to adjust any one or more of pivotable tension (i.e., how easily the rear shield 120 deflects during usage), operating height of the side panels 116 or 118, or rear shield 120 (e.g., by moving the connector 122 in a slot), or the like. Moreover, using the connector 122, the operator can remove the rear shield 120 during, e.g., maintenance operations or if the tines become jammed during use. Alternatively, rear shield 120 may be pivotably fixed to top cover 114 (e.g., via hinge connectors at or near the location of connectors 122) and the height of side panels 116, 118 may be moveable relative to rear shield 120 (e.g., via an adjustable connector 122 moving in a slot).

In certain instances, the operator can manually operate the tiller 100, e.g., pushing the tiller 100, using the handle 104. In these embodiments, the tiller 100 may include an interface which permits the operator to selectively permit manual operation. As described below, in other instances the tiller 100 may be self-powered. The tiller 100 can include a walking element 124 configured to move the tiller 100. By way of non-limiting example, the walking element 124 can include one or more wheels, such as a plurality of wheels. The plurality of wheels can include a first wheel 126 and a second wheel 128. In certain instances, only one of the first and second wheels 126 or 128 is self-powered. The other of the first or second wheels 126 or 128 can be unpowered. In other instances, both of the first and second wheels 126 and 128 can be self-powered. In a particular embodiment, and as described in greater detail below, the first and second wheels 126 and 128 can be connected together, e.g., by a drive axle, such that power imparted on either wheel 126 or 128, or the drive axle, powers both the first and second wheels 126 and 128.

The tiller 100 can further include a counterweight 130 that offsets, i.e., balances, the weight of the tines 106, if needed or desired. The counterweight 130 can be coupled with a bulbar 132 that extends from the body 102 in a direction away from the tines 106. In certain instances, the counterweight 130 can be removable from the bulbar 132. In other instances, the counterweight 130 can be fixed to the bulbar 132. In an embodiment, the bulbar 132 can form a forwardmost end of the tiller 100. In another embodiment, the counterweight 130 can form a forwardmost end of the tiller 100. To allow for different load balancing, the counterweight 130 can be adjustable. Adjustability of the counterweight 130 may be achieved, e.g., by moving the counterweight 130 relative to the bulbar 132, changing the weight of the counterweight 130 by adding or subtracting mass therefrom, or the like.

In operation, the walking element 124 may form a pivot point of rotation for the weight of the tines 106, as shown by line F_{T}. The weight of the counterweight 130, shown by line F_{C}, may be positioned to counteract the weight of the tines 106. The weight of the tines 106 multiplied by a distance between the center of gravity of the weight of the tines 106 and the fulcrum point (as measured left to right in FIG. 2) may thus be compared to the weight of the counterweight 130 multiplied by a distance between the center of gravity of the weight of the counterweight 130 and the fulcrum point (as measured left to right in FIG. 2). The product of the weight of the tines 106 and the distance between the center of gravity of the tines 106 and the fulcrum point may be referred to as a first torque, T₁. The product of the weight of the counterweight 130 and the distance between the center of gravity of the counterweight 130 and the fulcrum point may be referred to as a second torque, T₂. In accordance with an embodiment, it may be desirable for T₁ to be within ± 50% T₂, such as within ± 40% T₂, such as within ± 30% T₂, such as within ±20% T₂, such as within ±10% T₂. In a more particular embodiment, T₁ may be within ± 5% T₂, such as within ± 2.5% T₂, such as within ± 1% T₂. It should be understood that the rotational balance of the tiller 100 remains affected by other components thereof, such as the handle 104, the motors (described in greater detail below), the energy storage devices, etc. and their relative positions on the tiller. The counterweight 130 may be positioned or weighted to account for these other components. For example, the wheel-driving motor, energy storage devices, or both may be positioned further forward in a left-right direction (toward counterweight 130) than shown in FIG. 2 such that F_{C} need not be as great to achieve the desired ratio between T₁ and T₂. Similarly, the wheel-driving motor, energy storage devices, or both may be positioned further back in a left-right direction (toward tines 106) than shown in FIG. 2 such that F_{C} needs to be greater to achieve the desired ratio between T₁ and T₂.

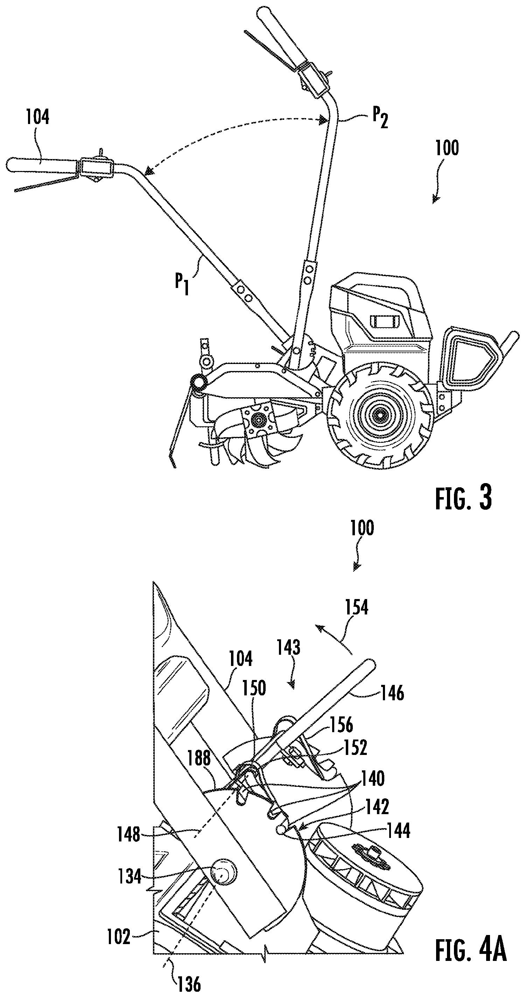

Referring to FIG. 3, the handle 104 can be moved between a plurality of angularly offset positions. For instance, FIG. 3 illustrates the handle 104 in a first position P₁, where the handle 104 may be positioned during use, and a second position P₂, which can correspond with a stored position. In the stored position, the handle 104 may be disposed within an areal footprint of the tiller 100 so as to reduce the area of space occupied by the tiller 100. In certain instances, the handle 104 may be further positioned in a third position, or even a fourth position, or even a fifth position, etc. As shown in FIG. 1, in an embodiment, the handle 104 can have a U-shape with two arms extending from the body 102 and connected together by a horizontal member.

Referring to FIG. 4A, the handle 104 can be coupled to the body 102 of the tiller 100 by one or more pins 134 that allow the handle 104 to rotate about at an axis 136. The pins 134 (e.g., bolts) can generally form a pivot point for the handle 104. While only one pin 134 is depicted in FIG. 4A, there may be a second pin (not illustrated) connecting the other side of the handle 104 to the body 102. Alternatively, the pin 134 depicted in FIG. 4A may extend through both sides of the handle 104. It should be understood that other attachment protocol are contemplated herein that may replace or supplement the pin 134 without deviating from the scope of the disclosure.

The handle 104 can include a structure having one or more stops 140, such as at least two stops 140, at least three stops 140, at least four stops 140, etc. The structure depicted in FIG. 4A is a plate having an arcuate surface 142. The stops 140 are slots that extend into the structure from the arcuate surface 142. The slots are spaced apart from one another along the arcuate surface 142. A locking mechanism 143 can be coupled to the tiller 100, e.g., at the body 102, and be selectively interfaced with the stops 140. The operator can move the locking mechanism 143 out of one stop 140 and rotate the handle 104 until the locking mechanism 143 is aligned with another one of the stops 140. Thus, the locking mechanism 143 can allow the operator to temporarily fix the handle 104 at one of the plurality of angularly offset positions.

In accordance with an embodiment, the locking mechanism 143 can be an elongated object, such as, e.g., a thick gauge wire, having a shape that allows it to interface with stops 140 on the structures associated with both arms of the handle 104. The locking mechanism 143 can include one or more stop elements 144 that interface with the stops 140, such as rest within the slots of the stops 140. In the illustrated embodiment, the locking mechanism 143 includes two stop elements 144 each disposed at an end of the locking mechanism 143. Each of the stop elements 144 can be selectively interfaced with one of the arms of the handle 104.

The locking mechanism 143 can include a handle 146. In an embodiment, the handle 146 can be disposed between the stop elements 144. In a more particular embodiment, the handle 146 can be disposed centrally between the stop elements 144, such as at a centerline of the handle 146. The handle 146 may have a surface condition that allows for easier gripping. Exemplary surface conditions include elastomeric overmolding, an elastomeric sleeve, knurling, finger cutouts, or the like.

The locking mechanism 143 can be pivotably coupled to the body 102 at a pivot axis 148. The locking mechanism 143 may be rotatably coupled to the body 102 at the pivot axis 148 through an interface 150. By way of non-limiting example, the interface 150 can include a projection extending away from the body 102 and having a loop 152 at a distal end of the interface 150. The loop 152 may be integral with the interface 150, formed, for example, from a bent distal end portion of the interface 150. The locking mechanism 143 can rotate within the loop 152, allowing the stop element(s) 144 to be selectively moved towards or away from the stops 140.

In the embodiment depicted in FIG. 4A, the locking mechanism 143 is in a locked position. In the locked position, the locking mechanism 143 interfaces with the structures, e.g., at stops 140, such that the handle 104 is maintained at a relatively fixed position. To release the handle 104, i.e., unlock the locking mechanism 143, the operator can manipulate the handle 146 of the locking mechanism 143. For example, in accordance with an embodiment, the operator can pull or push on the handle 146 in a direction as illustrated by arrow 154. When the stop elements 144 are clear of the stops 140, the handle 104 is free to rotate, for example, about axis 136.

A biasing element 156 can bias the locking mechanism 143 into the locked position. That is, the biasing element 156 can create an automatically locking handle 104 whereby the handle 104 automatically locks when the operator rotates the handle 104 to a position associated with a stop 140 and the operator is not actively biasing the handle 146 in the direction shown by arrow 154.

In the illustrated embodiment, the biasing element 156 is a spring which contacts the locking mechanism 143 at one or more locations near the stop element(s) 144. In a particular embodiment, the spring can be a leaf spring. By way of non-limiting example, the leaf spring can include a portion extending from the body 102 and curving at a location above the loop 152 of the interface 150. The leaf spring can then extend towards the stop elements 144 and press thereagainst, effectively biasing the stop elements 144 into the stops 140.

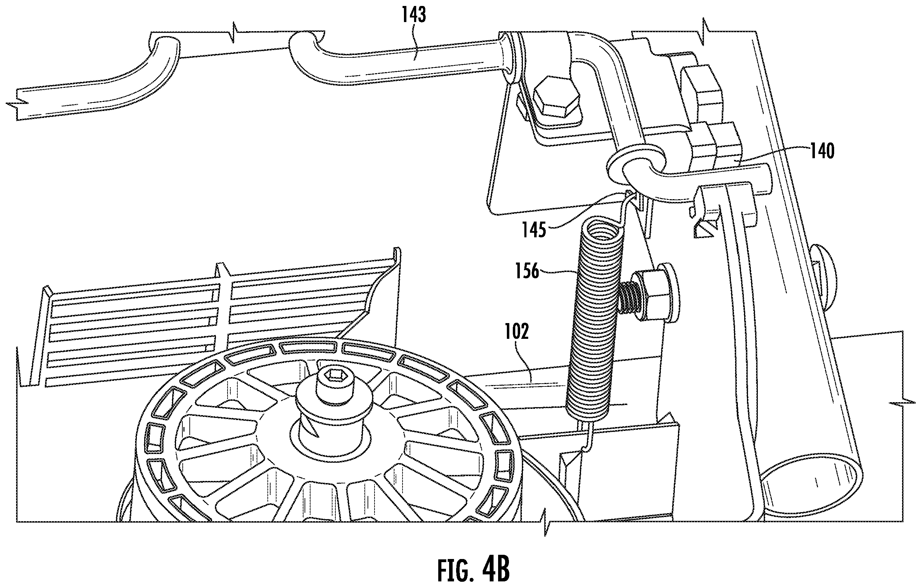

Referring to FIG. 4B, in accordance with another embodiment, the biasing element 156 can include another type of spring, such as a coil spring operating, e.g., as an extension spring. The coil spring can be engaged, for example, with the body 102 and the locking mechanism 143. In an embodiment, the coil spring can be engaged with a bracket 145 of the locking mechanism 143. Use of the coil spring may provide preload against the biasing element 156, thereby helping maintain the biasing element 156 in a desired stop 140. Moreover, use of the coil spring can prevent spring overextension which might occur, for example, when using the above-described leaf spring.

It should be understood that in one or more embodiments, the locking mechanism 143 described herein may be reversed with respect to the structure. That is, for instance, the structure can be part of, or extend from, the body 102 and the locking mechanism 143 can be part of, or extend from, the handle 104.

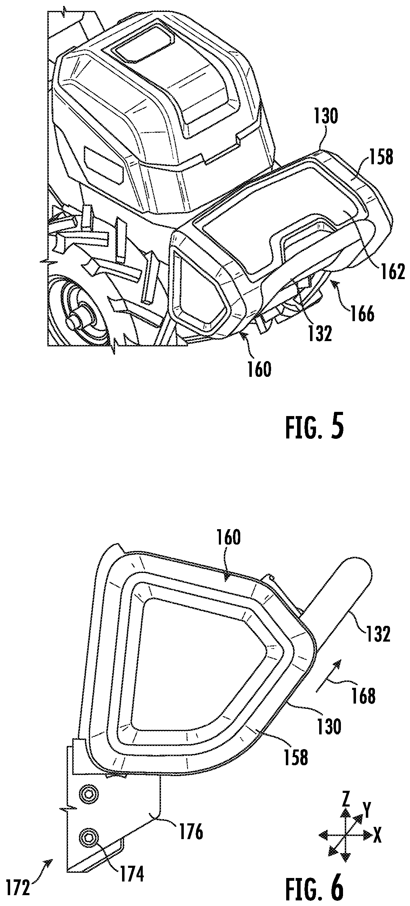

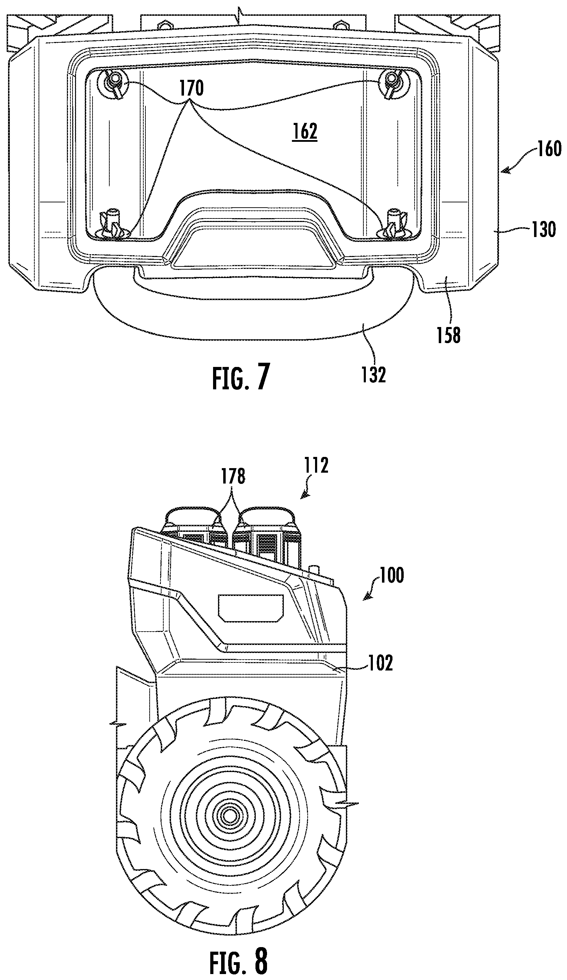

FIGS. 5 to 7 illustrate the counterweight 130 in accordance with one or more embodiments described herein. FIG. 5 depicts a front perspective view of the tiller 100 including the counterweight 130 disposed thereon. FIG. 6 depicts a side view of the counterweight 130 and bulbar 132. FIG. 7 depicts a top view of the counterweight 130 and bulbar 132. The counterweight 130 can generally include a body 158 having a shape that fits at least partially between the body 102 of the tiller 100 and the bulbar 132. The body 158 of the counterweight 130 can include an interior surface (not illustrated) defining an internal volume (not illustrated). The internal volume can be formed, for example, during formation of the counterweight 130. By way of non-limiting example, the counterweight 130 may be formed by rotational molding a single hollow body, by injection molding two pieces that are coupled together, e.g., sonically welded, or by blow molding a single hollow body. The resulting internal volume of the body 158 may thus be hollow. In certain instances, the hollow internal volume of the body 158 may be accessible through, e.g., an opening disposed in the body 158. The opening may be selectively closable, for example, by use of a cover. In this regard, the internal volume may be utilized to retain mass which can affect counterbalancing of the tines 106 as described above with respect to FIG. 2.

The body 158 of the counterweight 130 may further have an exterior surface 160 that is part of the sidewall of the body 158. The exterior surface 160 may have a shape that defines a recess 162. The recess 162 can extend into the body 158 so as to define a receiving area, e.g., for receiving additional mass to affect counterbalancing (e.g., sand), stored tools or tiller accessories, personal items such as smart devices which the operator wants to protect during use, or any combination thereof. Referring to FIG. 1, the counterweight 130 may further include a cover 164 which covers the recess 162 so as to protect the items disposed therein. The cover 164 may be selectively removable such that the operator can freely access the recess 162 or may be fixedly connected (e.g., by fasteners) after additional counterbalancing mass has been added therein.

The body 158 of the counterweight 130 may be shaped to engage with the bulbar 132 such that the bulbar 132 is at least partially hidden by the body 158 as seen from a side view depicted in FIG. 6. By way of example, the body 158 may define a bulbar receiving area 166 in which the bulbar 132 resides. In one embodiment, the bulbar receiving area 166 can have a depth such that the bulbar 132, when received in the bulbar receiving area 166, does not extend past the exterior surface 160, at least along a portion of the dimension of the bulbar receiving area 166 through which the bulbar 132 extends. In certain instances, the bulbar receiving area 166 can be configured to slidably receive the bulbar 132 when the counterweight 130 is introduced to the bulbar 132. That is, the counterweight 130 may be slidable along the bulbar 132 in a direction generally corresponding with arrow 168. The counterweight 130 may also be slidable relative to the bulbar in a direction along the X-axis, the Y-axis, the Z-axis, or any combination thereof (FIG. 6). When properly seated, the counterweight 130 may form a snug fit with the bulbar 132. In certain instances, proper seating of the counterweight 130 relative to the bulbar 132 can generate an indication to the operator that proper seating has occurred. The indication may include, for example, tactile feedback, audible feedback, visual feedback, or any combination thereof.

In an embodiment, the body 158 may include one or more openings which pass through the body 158 to allow a fastener to extend therethrough to couple the counterweight 130 to the tiller 100, e.g., at the bulbar 132. In the illustrated embodiment, the body 158 includes four openings 170. A fastener, such as a threaded fastener, can be inserted through each one of the openings 170 and secured to the body 158 by an engagement element, such as a winged nut. In certain instances, the fastener(s) can be integrally part of the bulbar 132. In other instances, the fastener(s) may be installed through openings in the bulbar 132. The engagement elements, e.g., winged nuts, may be disposed in the recess 162. Alternatively, non-fastening ends of the fasteners may be disposed in the recess 162 and the engagement elements may be disposed adjacent to the bulbar 132.

In certain instances, the bulbar 132 may be coupled to the body 102 of the tiller 100 through a removable interface 172. The removable interface 172 can include, for example, fasteners 174 which extend through a flange 176 of the bulbar 132. The fasteners can be selectively removed when the operator wants to remove the bulbar 132. In this regard, the counterweight 130 may be removable from the tiller 100 through a plurality of detachment mechanisms. More particularly, the counterweight 130 can be removed by removing the fasteners disposed at openings 170 or by removing the fasteners 174 from the removable interface 172. The counterweighting material may be dumped from the counterweight 130 by removing one or more of the fasteners 174 (e.g., a bottom-most fastener 174 on each side of the tiller 100) so that the counterweight 130 may pivot, e.g., about another one of the fasteners 174.

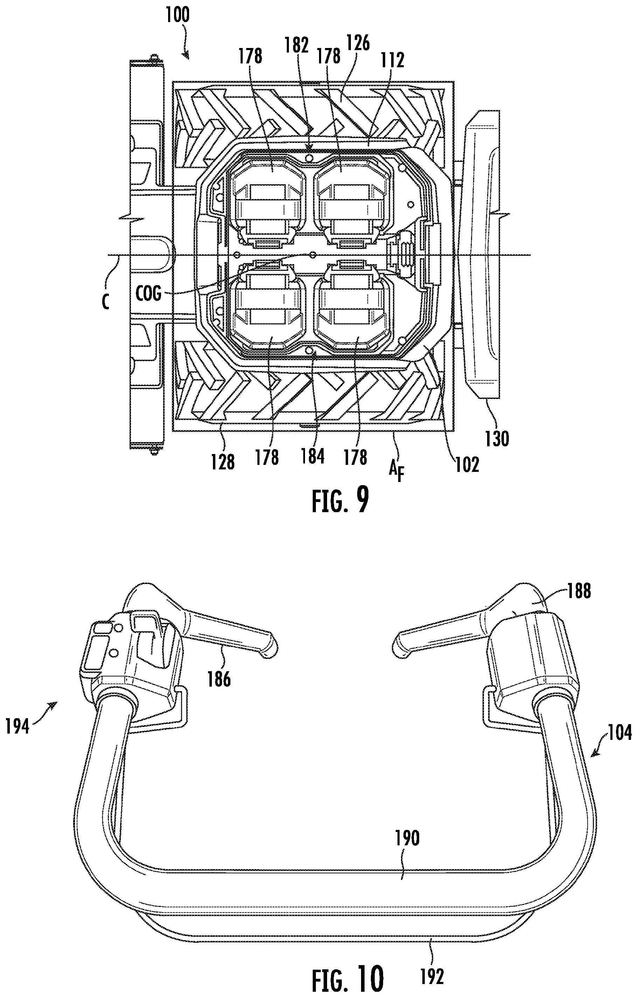

FIGS. 8 and 9 illustrate views of the battery receiving area 112 in accordance with exemplary embodiments of the present disclosure. More particularly, FIG. 8 depicts a side view of the body 102 of the tiller 100 and the battery receiving area 112 in relation therewith. FIG. 9 depicts a top view of the battery receiving area 112.

The battery receiving area 112 can be configured to receive a plurality of energy storage devices 178, e.g., batteries, for operating the tiller 100. By way of example, the plurality of energy storage devices 178 receivable in the battery receiving area 112 can include at least two energy storage devices 178, such as at least three energy storage devices 178, such as at least four energy storage devices 178, such as at least five energy storage devices 178, such as at least six energy storage devices 178. The plurality of energy storage devices 178 can be arranged in an A x B matrix where A is at least 1 and B is at least 1. As depicted in FIG. 9, the plurality of energy storage devices 178 includes four energy storage devices 178 disposed in a 2 x 2 matrix. The plurality of energy storage devices can define a center of gravity COG disposed at, or adjacent to, a centerline C of the body 102.

In an embodiment, all of the plurality of energy storage devices 178 can be disposed within a frontmost/backmost position of the first and second wheels 126 and 128. That is, the plurality of energy storage devices 178 can extend laterally past either/both of the first or second wheels 126 or 128 but all of the energy storage devices 178 are disposed at a length position between the first and second wheels 126 and 128. In another embodiment, at least one of the energy storage devices 178 can be positioned toward the tines 106, including between the tines 106 and wheels 126, 128.

In another embodiment, at least some of the plurality of energy storage devices 178 can be disposed at least partially within an areal footprint A_{F}, corresponding with an outermost dimension of the first and second wheels 126 and 128. In a particular embodiment, all of the plurality of energy storage devices 178 can be disposed at least partially within the areal footprint A_{F}. In yet a more particular embodiment, all of the plurality of energy storage devices 178 can be disposed fully within the areal footprint A_{F}.

Positioning the energy storage devices 178 within the areal footprint A_{F}, over the first and second wheels 126 and 128, increases weight disposed directly over the first and second wheels 126 and 128 and accordingly may increase grip of the first and second wheels 126 and 128 on the underlying ground surface during tilling operations and transit. Moreover, centralized placement of the energy storage devices 178, and more particularly placement over the rotational axis of the first and second wheels 126 and 128, can reduce or even eliminate imbalance caused by displacing weight forward or backward of the rotational axis.

In one embodiment, the counterweight 130 may receive or be at least partially formed by at least one of the plurality of energy storage devices 178. For example, the counterweight 130 can include the battery receiving area 112 in which at least one of the plurality of energy storage devices 178 is receivable. In one embodiment, there is no counterweight and the weight of the energy storage device(s) (and any other elements, such as a motor) disposed above the wheels 128 is sufficient to balance the weight of the tines 106.

Referring to FIG. 8, the body 102 of the tiller 100, and more particularly the battery receiving area 112, can be shaped such that at least a portion of at least one of the plurality of energy storage devices 178 is exposed from a top end of the body 102. That is, the energy storage device(s) 178 can extend past the top end of the body 102 and be visible from a side view of the tiller 100. In an embodiment, the top end of the body 102 can have an angled, i.e., sloped, shape as viewed from a side view. In this regard, the energy storage devices 178 can project different heights from the top end of the body 102. In the depicted example, the top end of the battery receiving area 112 is lower at the front end of the battery receiving area 112 than at the back end of the battery receiving area 112.

As depicted in FIG. 1, the battery receiving area 112 can be closed using a cover 180. The cover 180 can be connected to the battery receiving area 112, or another portion of the body 102, to allow the cover 180 to move between an open position and a closed position. With the cover 180 in the open position, the energy storage devices 178 may be accessible. With the cover 180 in the closed position, the energy storage devices 178 may be protected against debris, e.g., during operational use.

Referring again to FIG. 9, in one or more embodiments at least some of the plurality of energy storage devices 178 may be electrically connected together and electrically connected to one or more electric power supply elements, e.g., motors, of the tiller 100. In an embodiment, the plurality of energy storage devices 178 can be split into different banks, or groups, of energy storage devices 178. For instance, the plurality of energy storage devices 178 can include a first bank 182 of energy storage devices 178 and a second bank 184 of energy storage devices 178. While the depicted first and second banks 182 and 184 of energy storage devices 178 are arranged in a left-right arrangement with all of the energy storage devices 178 of the first bank 182 disposed on a left side of the tiller 100 and all of the energy storage devices 178 of the second bank 184 disposed on a right side of the tiller 100, in other embodiments, the first and second banks 182 and 184 can be split front-back, diagonally, in another pattern, or even randomly.

The energy storage devices 178 of the first bank 182 can be connected together in series. The energy storage devices 178 of the second bank 184 can similarly be connected together in series. The first and second banks 182 and 184 can be connected to one another in parallel. In this regard, and by way of non-limiting example, four 40V batteries can be connected to form an 80V output powered by two banks of energy storage devices 178. In another embodiment, the energy storage devices 178 of either, or both, the first or second banks 182 or 184 may be connected together in parallel.

As depicted in FIG. 9, all of the energy storage devices 178 can have a same, or generally same, size and capacity as one another. In a non-illustrated embodiment, at least one of the energy storage devices 178 can be different from at least one other energy storage device 178. For example, the different energy storage devices 178 can have different voltage capacities (e.g., 80 volts), different energy capacities (e.g., Wh, Ah), different sizes, different shapes, or any combination thereof. In certain instances, one or more of the plurality of energy storage devices 178 can be fixed to the tiller 100. In certain instances, one or more of the plurality of energy storage devices 178 can be removable from the tiller 100 (e.g., when cover 180 is in the open position). In certain instances, at least one of the energy storage devices 178 can be swappable with a different piece of equipment, such as a powered hand tool, e.g., a blower, a trimmer, an edger, a chainsaw, a push mower, a lopper, a mister, or the like.

Referring now to FIG. 10, the handle 104 of the tiller 100 can generally have a U-shape including two arms 186 and 188 connected together by a horizontal member 190. The handle 104 can include a bail 192 disposed at or adjacent to the horizontal member 190 and biased away from horizontal member 190. In certain instances, the bail 192 can prevent the tiller 100 from being operated when disengaged. That is, the bail 192 disallows operation of the tiller 100 when the bail 192 is not actively depressed against horizontal member 190.

The handle 104 can include one or more control elements 194 configured to control one or more aspects of the tiller 100. The control elements 194 can be grouped together, such as in a group disposed along one of the arms 186 or 188. In the depicted embodiment, the control elements 194 are disposed along the arm 186 on the left side of the handle 104.

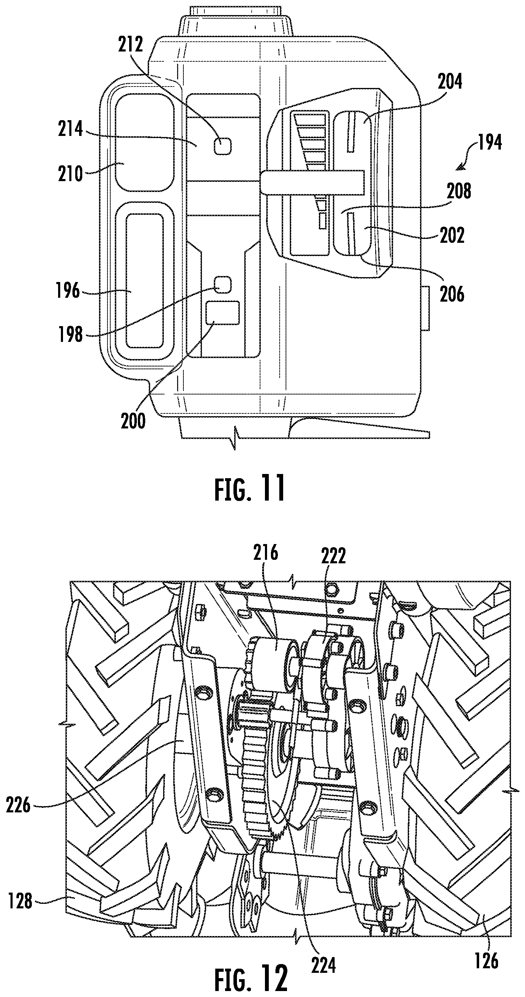

FIG. 11 illustrates a close up view of the control elements 194. In general, the control elements 194 can include a power ON/OFF interface 196 accessible by the operator to turn the tiller 100 on and off. The power ON/OFF interface 196 is shown as a depressible button, however, in other embodiments, the power ON/OFF interface 196 can be a different actuatable interface. An indicator 198 can indicate a current status of the tiller 100. More particularly, the indicator 198 can indicate whether the tiller 100 is in the on state or the off state, i.e., the position of the power ON/OFF interface 196. Indicia 200 may allow an operator to understand the indication displayed on the indicator 198. By way of non-limiting example, the indicator 198 can include a visual indicator including, e.g., an LED light. The visual indicator may illuminate when the tiller 100 is on, or for a period of time starting when the tiller 100 is turned on, or when the tiller 100 is in transport mode, in reverse mode, or the like. The control elements 194 can further include a speed adjustment interface 202, such as a speed adjustment dial having a knob for user interfacing. The speed adjustment interface 202 can generally have a forwardmost position 204 and a rearmost position 206. In an embodiment, the forwardmost position 204 can correspond with a maximum speed of the tiller 100 while the rearmost position 206 can correspond with a reverse operation. A stop position 208 can be disposed between the forwardmost and rearmost positions 204 and 206. The stop position 208 can generally correspond with a neutral position whereby the tiller 100 is not powered. In certain instances, the tiller 100 may be held at a fixed location when not powered. That is, for example, the motor described below may resist movement of the tiller 100. In other instances, the tiller 100 may be free to move when not powered. That is, the motor may not resist movement and the tiller 100 may be pushed by the operator without active motor resistance while the speed adjustment dial is disposed at the stop position 208.

The tiller 100 can have a transport mode whereby the tiller 100 is configured to be transported at high speeds with the tines 106 being unpowered. This may be particularly useful, for example, when moving the tiller from an operation site to a storage location. To activate the transport mode, the operator can engage a transportation mode button 210 of the control elements 194. The transportation mode button 210 is shown as a depressible button, however, in other embodiments, the transportation mode button 210 can be a different actuatable interface. An indicator 212 can indicate a current status of the transportation mode button 210. More particularly, the indicator 212 can indicate whether transportation mode is enabled or disabled. Indicia 214 may allow the operator to understand the indication being displayed on the indicator 212. By way of non-limiting example, the indicator 212 can include a visual indicator, including, e.g., an LED light. The visual indicator may illuminate when the transportation mode is enabled.

The tiller 100 may be configurable between various different operating protocols, at least some of which may be controllable by one or more of the control elements 194.

In a first operating protocol, the operator can run the tiller 100 with the tines 106 being static, i.e., not rotating, and the tiller 100 being self-powered through a range of adjustable speeds as set by the speed adjustment interface 202. The range of adjustable speeds may be between 0 miles per hour (MPH) and 5 MPH, such as between 0 MPH and 4 MPH, such as between 0 MPH and 3 MPH, such as between 0 MPH and 2.5 MPH.

In a second operating protocol, the tines 106 can be engaged, i.e., rotatably driven, while the tiller 100 is self-propelled. In certain instances, engagement of the tines 106 can only occur when the tiller 100 is stationary. In other instances, engagement of the tines 106 can occur at any time. That is, engagement of the tines 106 can occur regardless of how fast the tiller 100 is being propelled. In other instances, the tine 106 may only be engageable when the tiller 100 is being propelled below a maximum threshold speed. For example, the tines 106 may be prevented from engagement when the tiller 100 is travelling over 1.5 MPH. In the event the operator adjusts the speed adjustment interface 202 to speeds in excess of 1.5 MPH, rotation of the tines 106 may be automatically stopped. In certain instances, the tiller 100 may include a selectable interface (not illustrated) that can override or adjust the speed at which rotation of the tines 106 is terminated.

In a third operating protocol, the tiller 100 can operate in transportation mode. In transportation mode, the tiller 100 may be self-propelled at a set speed, or within a set range of speeds, with the tines 106 disengaged. Transportation mode may be particularly useful, for example, when moving the tiller from an operation site to a storage area during which time operation of the tines 106 is not desired and the operator wants to move quickly. As described above, the operator can initiate transportation mode by selecting, e.g., pushing, the transportation mode button 210. Once arrived at the destination, the operator can again select, e.g., push, the transportation mode button 210 to deactivate transportation mode and resume normal operations. Alternatively, the operator can release the bail 192 (FIG. 10). In certain instances, transportation mode may only be accessible when the speed adjustment interface 202 is disposed at a certain prescribed setting, e.g., at the forwardmost position 204. In these instances, transportation mode may also be disabled by moving the speed adjustment interface 202 away from the forwardmost position 204. Other means for disabling transportation mode might include depressing the power ON/OFF interface 196 or another suitable disengagement protocol.

In an embodiment, the first, second, and third operating protocols can be adjustable. In another embodiment, the first, second, and third operating protocols can be fixed, i.e., nonadjustable.

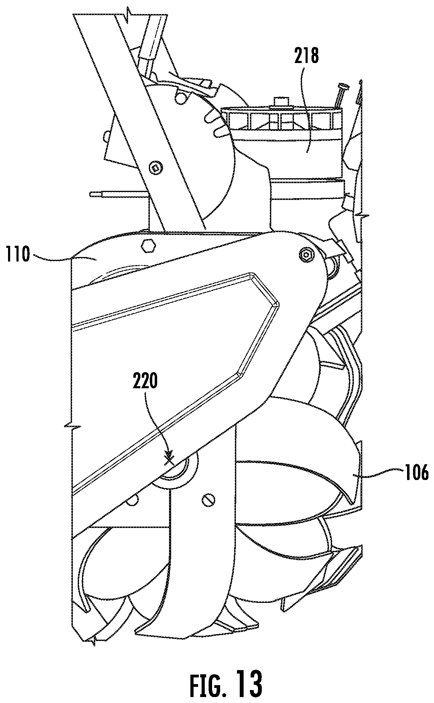

In an embodiment, the tiller 100 may include a plurality of motors. The plurality of motors can include, for example, a first motor 216 (FIG. 12) configured to drive the walking element 124 to move the tiller 100 and a second motor 218 (FIG. 13) configured to drive rotation of the tines 106 about a rotational axis 220 of the tines 106. The first and second motors 216 and 218 can be configured to operate independent of one another. That is, the first motor 216 can continue to operate while operation of the second motor 218 is terminated, and vice versa.

FIGS. 12 and 13 illustrate views of the first and second motors 216 and 218, respectively. As depicted in FIGS. 12 and 13, the first motor 216 can be disposed between the first and second wheels 126 and 128. The second motor 218 can be disposed at a vertical elevation above the rotational axis 220 of the tines 106. More particularly, the second motor 218 can be disposed above the tine shield 110. While not depicted, either one or both of the first or second motors 216 or 218 can include a cover (not illustrated) to protect the motor.

FIG. 12 illustrates a bottom perspective view of a portion of the tiller 100 as seen between the first and second wheels 126 and 128 in accordance with an exemplary embodiment. The first motor 216 comprises an electric motor. More particularly, the first motor 216 can comprise a variable-speed electric motor configured to be operable at a plurality of operating speeds. The first motor 216 can receive electrical energy from the energy storage devices 178. By way of exemplary embodiment, the first motor 216 can be coupled to a gearbox 222 which drives a drive gear 224. The drive gear 224 can be coupled to an axle 226 extending between the first and second wheels 126 and 128. In an embodiment, the first motor 216, gearbox 222, drive gear 224, and axle 226 can be disposed at least partially in a volume defined between the first and second wheels 126 and 128, as seen from a side view of the tiller 100 (e.g., FIG. 2). As the operator adjusts the speed of the tiller 100, the operating speed of the first motor 216 can adjust accordingly and in view of the gear reduction occurring at the gearbox 222. In an embodiment, the axle 226 can transmit torque to the first and second wheels 126 and 128.

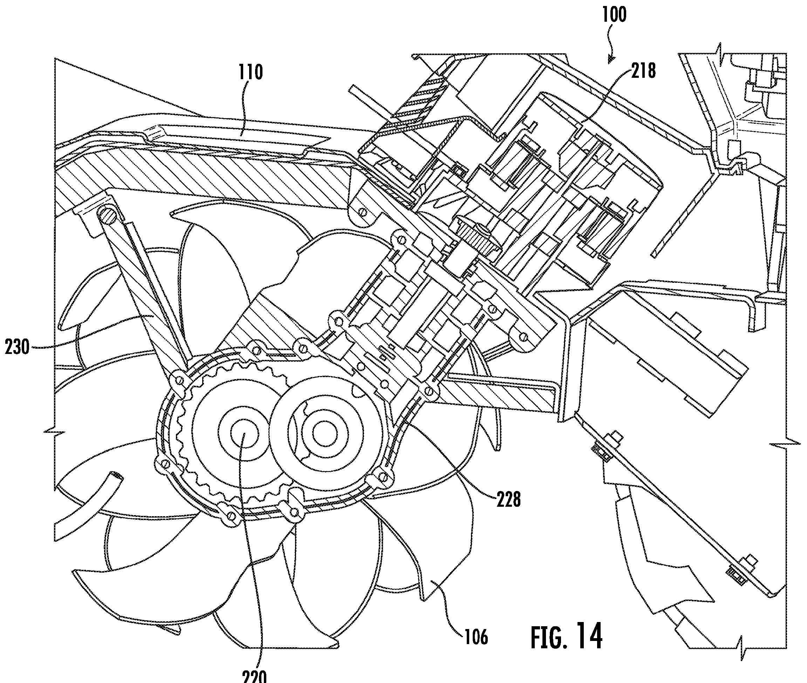

FIG. 14 illustrates a cross-sectional view of a portion of the tiller 100 as seen looking along the rotational axis 220 of the tines 106. As depicted in FIG. 14, an output drive shaft of the second motor 218 can be coupled to the tines 106 through a gearbox 228. The gearbox 228 can extend from the second motor 218 to the tines 106 and rotatably drive the tines 106 about the rotational axis 220. In an embodiment, the gearbox 228 can include a worm drive gearbox. The worm drive gearbox can have a reduction ratio in a range of 2:1 and 500:1, such as in a range of 10:1 and 100:1, such as in a range of 50:1 and 75:1. In a particular embodiment, the worm drive gearbox can have a reduction ratio of approximately 65:1. In this regard, the tines 106 can have a rotational speed of 200 RPM when the second motor 218 has a rotational output of 13000 RPM. In certain instances, the rotational output of the second motor 218 can be fixed, e.g., at 13000 RPM. In other instances, the rotational output of the second motor 218 can be variable such that the tines 106 can be rotated at variable speeds.

As depicted, the gearbox 228 can extend through the tine shield 110 from the second motor 218 which is disposed above the tine shield 110. In certain instances, the gearbox 228 can interface with the tines 106 at, or adjacent to, a lateral side of the shaft on which the tines 106 are disposed. In other instances, the gearbox 228 can interface with the tines 106 proximate a central location of the shaft on which the tines 106 are disposed. The tine shield 110 may include a stay 230 to support the tine shield 110 relative to the shaft on which the tines 106 are disposed.

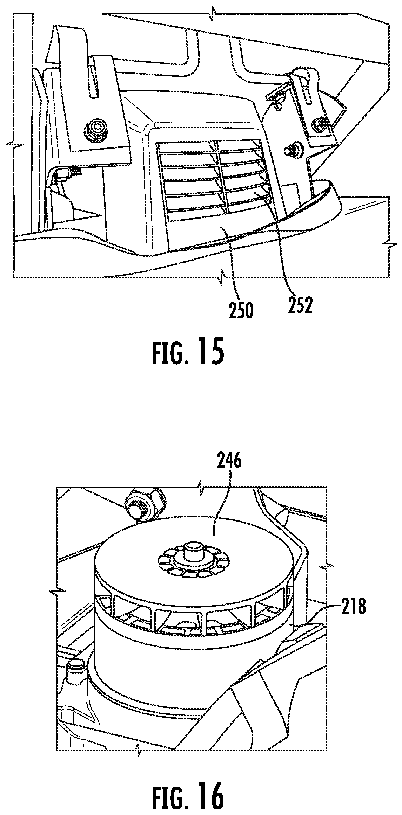

FIGS. 15 to 17 illustrate a cooling system 232 of the tiller 100 in accordance with an exemplary embodiment of the present disclosure.

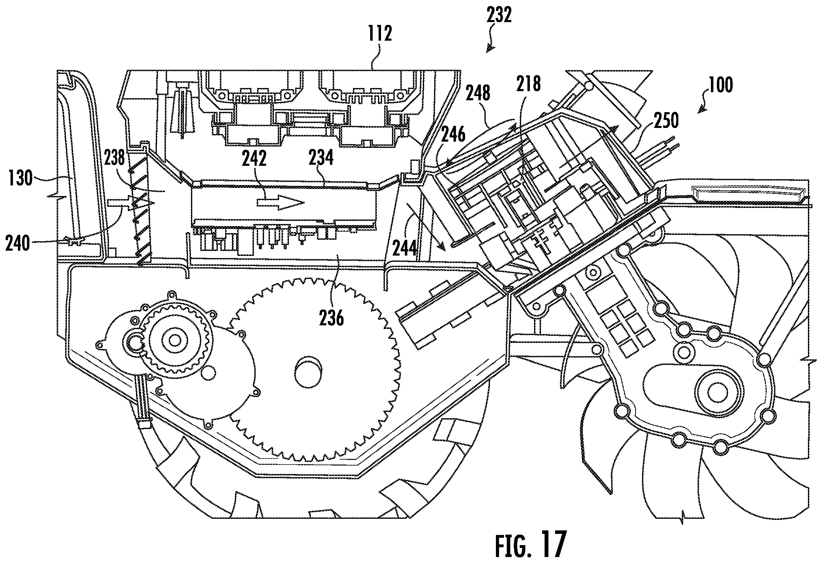

Referring initially to FIG. 17, a circuit board 234 of the tiller 100 is illustrated in an exemplary location below the battery receiving area 112. As described in greater detail below, the cooling system 232 can be configured to draw air through a duct 236 to cool at least one, such as both, of the circuit board 234 and second motor 218.

Air is drawn into the duct 236 through an air inlet 238 as indicated by arrow 240. The air inlet 238 can be disposed between the second motor 218 and the counterweight 130. After entering the duct 236, the air can then pass through the duct 236 as indicated by arrows 242 and 244, passing by the circuit board 234 in the process. The air can be drawn into the duct 236 by a fan. In one embodiment, the fan can be a radial centrifugal fan 246 (FIG. 16) rotating, e.g., in a direction indicated by arrow 248 (FIG. 17). The radial centrifugal fan 246 can be coupled to the second motor 218 such that the radial centrifugal fan 246 rotates at a same relative speed as the second motor 218. The air can then be discharged through a vent 250. The vent 250 can be disposed adjacent to the second motor 218 and include fixed louvers 252. In certain instances, the vent 250 can include one or more adjustable openings, e.g., adjustable louvers rather than fixed louvers 252, so as to control airflow through the duct 236. In an embodiment, the duct 236 may define a passageway extending through at least a portion of the body 102 of the tiller 100. In other embodiments, the duct 236 may generally refer to an open area in the body 102 that is not necessarily defined by sidewalls. That is, the radial centrifugal fan 246 can simply pull air from different places and not specifically (i.e., only) from the air inlet 238.

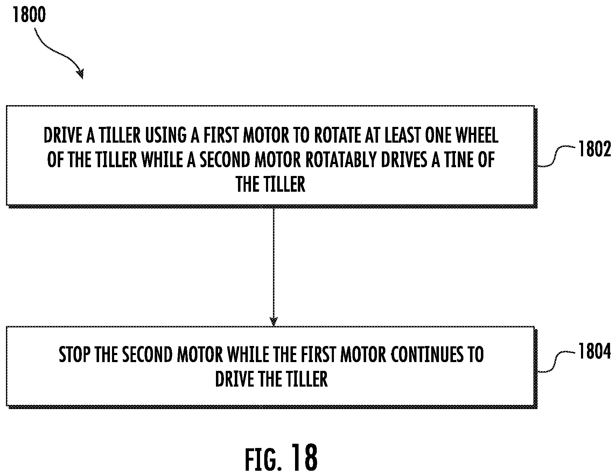

FIG. 18 illustrates a flowchart of a method 1800 of operating a tiller. The method 1800 generally includes a step 1802 of driving the tiller using a first motor to rotate at least one wheel of the tiller while a second motor rotatably drives a tine of the tiller. The method further includes a step 1804 of stopping the second motor while the first motor continues to drive the tiller. The step 1804 of stopping the second motor may be performed independent of the first motor. That is, the second motor can be stopped while the first motor remains on, driving the tiller.

In an embodiment, the step 1804 of stopping the second motor can occur automatically when the tiller is put into a reverse mode, operating below a minimum threshold drive speed, operating in a transportation mode where the drive speed exceeds a maximum threshold drive speed, or any combination thereof.

In an embodiment, the method 1800 can further include a step of adjusting a speed of the first motor to adjust a drive speed of the tiller. In an embodiment, adjusting the speed of the first motor can be performed before stopping the second motor. In another embodiment, adjusting the speed of the first motor can be performed while stopping the second motor. In yet another embodiment, adjusting the speed of the first motor can be performed after stopping the second motor.

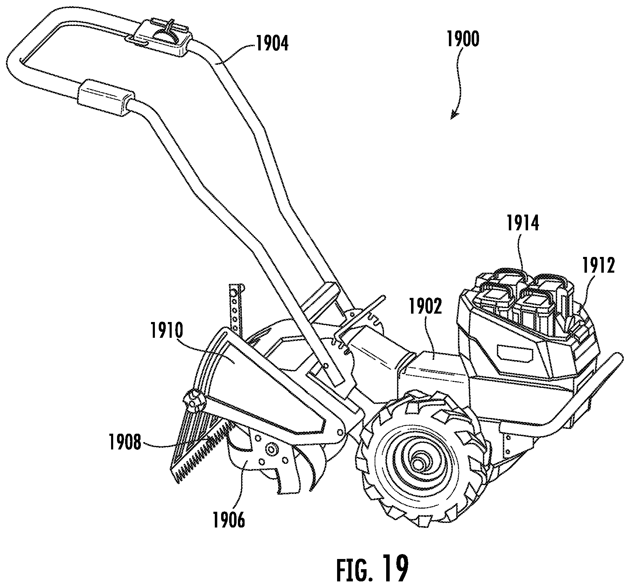

FIG. 19 illustrates a perspective view of a tiller 1900 in accordance with an exemplary embodiment of the present disclosure. The tiller 1900 includes a body 1902, a handle 1904 extending rearwardly from the body 1902, tines 1906 disposed within a volume 1908 of a tine shield 1910, and a battery receiving area 1912. As illustrated, the tines 1906 are disposed at a rear end of the body 1902. At least a portion of the tines 1906 may be disposed below a portion of the handle 1904. The battery receiving area 1912 can receive one or more energy storage devices, such as a plurality of energy storage devices 1914. As depicted, the battery receiving area 1912 can be disposed at a front end of the body 1902. In this regard, the battery receiving area 1912 (along with the plurality of energy storage devices 1914) can form, e.g., be a part of, a counterweight to offset the weight of the tines 1906. A cover (not illustrated) can be disposed at the battery receiving area 1912 to selectively cover the energy storage devices 1914.

Tillers in accordance with embodiments of the present disclosure can have different relative layouts and spatial arrangements to achieve desirable operational characteristics. For example, the tiller 100 depicted in FIG. 1 has a rearwardly extending handle 104, a walking element 124, a battery receiving area 112, and a counterweight 130. The handle 104 is disposed at a first side of the tiller 100 while the counterweight is disposed at a second (opposite) side of the tiller 100. Meanwhile, the battery receiving area 112 is disposed above the walking element 124. Since the walking element 124 is defined by first and second wheels 126 and 128 which rotate about a pivot axis, placement of the battery receiving area 112 (and one or more energy storage devices) at a location near the walking element 124, i.e., directly above the walking element 124, can reduce the impact of the energy storage devices on rotational balance of the tiller 100, i.e., about the pivot axis of the first and second wheels 126 and 128. In this regard, the balance of the tiller 100 can be arranged to achieve a desired apparent weight of the tiller in operation and when not in operation.

Referring to FIG. 19, by way of another example, the battery receiving area 1912 can be disposed at a forward end of the tiller 1900 opposite from the tines 1906. In this regard, the battery receiving area 1912 (and one or more energy storage devices 1914) can act as a counterweight to balance the weight of the tines 1906. In this regard, in certain instances the counterweight 130 depicted, e.g., in FIG. 1, can be removed and replaced by the battery receiving area 1912 and one or more energy storage devices 1914.

In an embodiment, the first motor 216 can be disposed closer to the pivot axis of the first and second wheels 126 and 128 as compared to the second motor 218. As depicted in FIG. 13, the second motor 218 can be disposed on a side of the walking element 124 (e.g., in front of the walking element 124 or behind the walking element 124) while the first motor 216 can be disposed at the walking element 124, e.g., captured within a space between the first and second wheels 126 and 128, as depicted in FIG. 12.

In an embodiment, the first motor 216 is disposed a first distance, D₁, away from the pivot axis of the first and second wheels 126 and 128 (as measured in a front-back direction of the tiller 100) and the second motor 218 is disposed at a second distance, D₂, away from the pivot axis (as measured in a front-back direction of the tiller 100). In an embodiment, D₂ is greater than D₁. For example, D₂ can be at least 1.01 D₂, such as at least 1.05 D₂, such as at least 1.1 D₂, such as at least 1.25 D₂, such as at least 1.5 D₂, such as at least 2.0 D₂, such as at least 2.5 D₂, such as at least 3.0 D₂, such as at least 5 D₂.

In an embodiment, the second motor 218 is disposed at least partially between the tines 106 and the walking element 124. By way of a non-limiting example, the second motor 218 can be disposed halfway between the tines 106 and the walking element 124 in a front-back direction of the tiller 100. In another example, the second motor 218 can be closer to the walking element 124 than the tines 106. This can result in a more centralized weight distribution (relative to the pivot axis of the first and second wheels 126 and 128). In another example, the second motor 218 can be closer to the tines 106 than the walking element 124. This can result in more weight, and thus more downward force, over the tines 106.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A tiller (100) comprising:
a walking element (124) configured to move the tiller (100);
a tine (106) rotatable about a rotational axis (220);
a first motor (216) configured to drive the walking element (124) to move the tiller (100);
an energy storage device (178),
wherein the tine (106) is disposed on a first side of the walking element (124), and
wherein a counterweight (130) is disposed on a second side of the walking element (124) opposite the first side, the counterweight (130) being adjustable to allow for different load balancing of the tiller (100); and
wherein the energy storage device (178) is disposed above the walking element (124) or wherein the energy storage device (178) is disposed toward or on the second side.

2. The tiller (100) of claim 1, wherein the walking element (124) comprises a plurality of wheels including a first wheel (126) and a second wheel (128), wherein the first motor (216) is disposed between the first wheel (126) and the second wheel (128).

3. The tiller (100) of claim 2, wherein the tiller (100) further comprises a second motor (218) configured to drive rotation of the tine (106) about the axis (220), and wherein the second (218) motor is disposed at a vertical elevation above the rotational axis (220).

4. The tiller (100) of claim 3, wherein the tine (106) is disposed within a volume defined at least partially by a tine shield (110) disposed above the tine (106), and wherein the second motor (218) is disposed at a vertical elevation above the tine shield (110).

5. The tiller (100) of any one of claims 2 to 4, wherein the first motor (216) comprises an electric motor, wherein the electric motor is coupled to a gearbox (222), wherein the gearbox (222) is configured to drive a drive gear (224), wherein the drive gear (224) is coupled to an axle (226) extending between the first wheel (126) and the second wheel (128).

6. The tiller (100) of claim 5, wherein the electric motor, the gearbox (222), the drive gear (224), and the axle (226) are all disposed in a volume defined entirely by the first wheel (126) and the second wheel (128) as seen from a side view of the tiller (100).

7. The tiller (100) of any one of claims 1 to 6, wherein the tiller (100) is configured to receive a plurality of energy storage devices (178), and wherein the plurality of energy storage devices (178) comprise a first bank (182) of energy storage devices (178) connected in series and a second bank (184) of energy storage devices (178) connected in series, and wherein the first and second banks (182, 184) of energy storage devices (178) are connected to one another in parallel.

8. The tiller (100) of claim 3, wherein the first and second motors (216 and 218) are independently operable, and wherein the first motor (216) is a variable-speed electric motor configured to be operable at a plurality of operating speeds.

9. The tiller (100) of claim 3, wherein the tiller (100) further comprises a circuit board (234) and cooling system (232) configured to cool at least one of the circuit board (234) and the second motor (218).

10. The tiller (100) of claim 9, wherein the circuit board (234) is disposed between the second side and the second motor (218), and wherein the cooling system (232) is configured to:
draw air into a duct (236) disposed between the second side and the circuit board (234);
pass the air by the circuit board (234);
pass the air by the second motor (218); and
discharge the air through a vent (250) disposed adjacent to the second motor (218).

11. The tiller (100) of claim 10, wherein the cooling system (232) comprises a radial centrifugal fan (246) powered by the second motor (218), and wherein the radial centrifugal fan (246) is configured to draw air into the duct (236), past the circuit board (234) and second motor, and discharge the air through the vent (250).

12. The tiller (100) of claim 1, wherein the counterweight (130) comprises a body (158) having an interior surface defining an internal volume, and wherein the body (158) has an exterior surface (160) defining a recess (162).

13. The tiller (100) of claim 1, wherein counterweight (130) comprises the energy storage device (178).

14. The tiller (100) of any one of claims 1 to 13, further comprising a handle (104) extending from a body (102) of the tiller (100), wherein the handle (104) comprises one or more control elements (194) configured to control the tiller (100).

## Patentansprüche

1. Bodenfräse (100), umfassend:
eine Fahreinrichtung (124), die dazu ausgelegt ist, die Bodenfräse (100) fortzubewegen;
eine Zinke (106), die um eine Drehachse (220) drehbar ist;
einen ersten Motor (216), der dazu ausgelegt ist, die Fahreinrichtung (124) anzutreiben, um die Bodenfräse (100) fortzubewegen;
eine Energiespeichervorrichtung (178),
wobei die Zinke (106) auf einer ersten Seite der Fahreinrichtung (124) angeordnet ist und
wobei ein Gegengewicht (130) auf einer der ersten Seite gegenüberliegenden zweiten Seite der Fahreinrichtung (124) angeordnet ist, wobei das Gegengewicht (130) einstellbar ist, um unterschiedliche Lastverteilungen der Bodenfräse (100) zu ermöglichen; und
wobei die Energiespeichervorrichtung (178) über der Fahreinrichtung (124) angeordnet ist oder wobei die Energiespeichervorrichtung (178) in Richtung der zweiten Seite oder auf dieser angeordnet ist.

2. Bodenfräse (100) nach Anspruch 1,
wobei die Fahreinrichtung (124) eine Vielzahl von Rädern umfasst, darunter ein erstes Rad (126) und ein zweites Rad (128), wobei der erste Motor (216) zwischen dem ersten Rad (126) und dem zweiten Rad (128) angeordnet ist.

3. Bodenfräse (100) nach Anspruch 2,
wobei die Bodenfräse (100) ferner einen zweiten Motor (218) umfasst, der dazu ausgelegt ist, die Drehung der Zinke (106) um die Achse (220) zu bewirken, und wobei der zweite Motor (218) in vertikaler Erstreckung über der Drehachse (220) angeordnet ist.

4. Bodenfräse (100) nach Anspruch 3,
wobei die Zinke (106) in einem Raum angeordnet ist, der zumindest teilweise durch einen oberhalb der Zinke (106) angeordneten Zinkenschutzschild (110) begrenzt wird, und wobei der zweite Motor (218) in vertikaler Erstreckung oberhalb des Zinkenschutzschilds (110) angeordnet ist.

5. Bodenfräse (100) nach einem der Ansprüche 2 bis 4,
wobei der erste Motor (216) einen Elektromotor umfasst, wobei der Elektromotor mit einem Getriebe (222) gekoppelt ist, wobei das Getriebe (222) dazu ausgelegt ist, ein Antriebszahnrad (224) anzutreiben, wobei das Antriebszahnrad (224) mit einer Achse (226) gekoppelt ist, die sich zwischen dem ersten Rad (126) und dem zweiten Rad (128) erstreckt.

6. Bodenfräse (100) nach Anspruch 5,
wobei der Elektromotor, das Getriebe (222), das Antriebszahnrad (224) und die Achse (226) alle in einem Raum angeordnet sind, der in einer Seitenansicht der Bodenfräse (100) vollständig durch das erste Rad (126) und das zweite Rad (128) begrenzt wird.

7. Bodenfräse (100) nach einem der Ansprüche 1 bis 6,
wobei die Bodenfräse (100) dazu ausgelegt ist, eine Vielzahl von Energiespeichervorrichtungen (178) aufzunehmen, und wobei die Vielzahl von Energiespeichervorrichtungen (178) eine erste Reihe (182) von in Reihe geschalteten Energiespeichervorrichtungen (178) und eine zweite Reihe (184) von in Reihe geschalteten Energiespeichervorrichtungen (178) umfasst, und wobei die erste und die zweite Reihe (182, 184) von Energiespeichervorrichtungen (178) parallel zueinander geschaltet sind.

8. Bodenfräse (100) nach Anspruch 3,
wobei der erste und der zweite Motor (216 und 218) unabhängig voneinander betreibbar sind und wobei der erste Motor (216) ein Elektromotor mit variabler Drehzahl ist, der so ausgelegt ist, dass er mit mehreren Betriebsdrehzahlen betrieben werden kann.

9. Bodenfräse (100) nach Anspruch 3,
wobei die Bodenfräse (100) ferner eine Leiterplatte (234) und ein Kühlsystem (232) umfasst, das dazu ausgelegt ist, zumindest eines aus Leiterplatte (234) und zweitem Motor (218) zu kühlen.

10. Bodenfräse (100) nach Anspruch 9,
wobei die Leiterplatte (234) zwischen der zweiten Seite und dem zweiten Motor (218) angeordnet ist und wobei das Kühlsystem (232) ausgelegt ist zum:
Ansaugen von Luft in einen zwischen der zweiten Seite und der Leiterplatte (234) angeordneten Kanal (236);
Vorbeileiten von Luft an der Leiterplatte (234);
Vorbeileiten von Luft am zweiten Motor (218); und
Ausstoßen von Luft durch eine Entlüftungsöffnung (250), die angrenzend an den zweiten Motor (218) angeordnet ist.

11. Bodenfräse (100) nach Anspruch 10,
wobei das Kühlsystem (232) ein von dem zweiten Motor (218) angetriebenes Radialgebläse (246) umfasst und wobei das Radialgebläse (246) dazu ausgelegt ist, Luft in den Kanal (236) anzusaugen, an der Leiterplatte (234) und dem zweiten Motor vorbeizuleiten und die Luft durch die Entlüftungsöffnung (250) auszustoßen.

12. Bodenfräse (100) nach Anspruch 1,
wobei das Gegengewicht (130) einen Körper (158) umfasst, der eine Innenfläche aufweist, welche einen Innenraum begrenzt, und wobei der Körper (158) eine Außenfläche (160) aufweist, die eine Aussparung (162) bildet.

13. Bodenfräse (100) nach Anspruch 1,
wobei das Gegengewicht (130) die Energiespeichervorrichtung (178) umfasst.

14. Bodenfräse (100) nach einem der Ansprüche 1 bis 13,
ferner umfassend einen Lenkholm (104), der sich von einem Körper (102) der Bodenfräse (100) ausgehend erstreckt, wobei der Lenkholm (104) ein oder mehrere Bedienelemente (194) umfasst, die dazu ausgebildet sind, die Bodenfräse (100) zu bedienen.

## Revendications

1. Motoculteur (100) comprenant :
un dispositif de déplacement (124) conçu pour déplacer le motoculteur (100) ;
une dent (106) pouvant tourner autour d'un axe de rotation (220) ;
un premier moteur (216) conçu pour entraîner le dispositif de déplacement (124) afin de déplacer le motoculteur (100) ;
un dispositif de stockage d'énergie (178),
dans lequel
la dent (106) est disposée sur un premier côté du dispositif de déplacement (124), et
un contrepoids (130) est disposé sur un deuxième côté du dispositif de déplacement (124) opposé au premier côté, le contrepoids (130) étant réglable pour permettre différents équilibrages de charge du motoculteur (100) ; et
le dispositif de stockage d'énergie (178) est disposé au-dessus du dispositif de déplacement (124), ou
le dispositif de stockage d'énergie (178) est disposé vers ou sur le deuxième côté.

2. Motoculteur (100) selon la revendication 1,
dans lequel le dispositif de déplacement (124) comprend une pluralité de roues, dont une première roue (126) et une deuxième roue (128), le premier moteur (216) étant disposé entre la première roue (126) et la deuxième roue (128).

3. Motoculteur (100) selon la revendication 2,
dans lequel le motoculteur (100) comprend en outre un deuxième moteur (218) conçu pour entraîner la rotation de la dent (106) autour de l'axe (220), et le deuxième moteur (218) est disposé à une hauteur verticale au-dessus de l'axe de rotation (220).

4. Motoculteur (100) selon la revendication 3,
dans lequel la dent (106) est disposée à l'intérieur d'un volume défini au moins partiellement par un bouclier de protection de dent (110) situé au-dessus de la dent (106), et le deuxième moteur (218) est disposé à une hauteur verticale au-dessus du bouclier de protection de dent (110).

5. Motoculteur (100) selon l'une des revendications 2 à 4,
dans lequel le premier moteur (216) comprend un moteur électrique, le moteur électrique est couplé à un engrenage (222), l'engrenage (222) est conçu pour entraîner un pignon d'entraînement (224), et le pignon d'entraînement (224) est couplé à un essieu (226) qui s'étend entre la première roue (126) et la deuxième roue (128).

6. Motoculteur (100) selon la revendication 5,
dans lequel le moteur électrique, l'engrenage (222), le pignon d'entraînement (224) et l'essieu (226) sont tous disposés dans un volume entièrement défini par la première roue (126) et la deuxième roue (128), en vue de côté sur le motoculteur (100).

7. Motoculteur (100) selon l'une des revendications 1 à 6,
dans lequel le motoculteur (100) est conçu pour recevoir une pluralité de dispositifs de stockage d'énergie (178), et la pluralité de dispositifs de stockage d'énergie (178) comprend une première rangée (182) de dispositifs de stockage d'énergie (178) connectés en série et une deuxième rangée (184) de dispositifs de stockage d'énergie (178) connectés en série, et les première et deuxième rangées (182, 184) de dispositifs de stockage d'énergie (178) sont connectées entre elles en parallèle.

8. Motoculteur (100) selon la revendication 3,
dans lequel les premier et deuxième moteurs (216 et 218) peuvent fonctionner indépendamment l'un de l'autre, et le premier moteur (216) est un moteur électrique à vitesse variable conçu pour fonctionner à plusieurs vitesses de fonctionnement.

9. Motoculteur (100) selon la revendication 3,
dans lequel le motoculteur (100) comprend en outre une carte de circuit imprimé (234) et un système de refroidissement (232) conçu pour refroidir au moins l'un parmi la carte de circuit imprimé (234) et le deuxième moteur (218).

10. Motoculteur (100) selon la revendication 9,
dans lequel la carte de circuit imprimé (234) est disposée entre le deuxième côté et le deuxième moteur (218), et le système de refroidissement (232) est conçu pour :
aspirer de l'air dans un conduit (236) disposé entre le deuxième côté et la carte de circuit imprimé (234) ;
faire passer l'air devant la carte de circuit imprimé (234) ;
faire passer l'air devant le deuxième moteur (218) ; et
évacuer l'air par un évent (250) disposé de façon adjacente au deuxième moteur (218).

11. Motoculteur (100) selon la revendication 10,
dans lequel le système de refroidissement (232) comprend un ventilateur centrifuge radial (246) entraîné par le deuxième moteur (218), et le ventilateur centrifuge radial (246) est conçu pour aspirer de l'air dans le conduit (236), le faire passer devant la carte de circuit imprimé (234) et le deuxième moteur, et évacuer l'air par l'évent (250).

12. Motoculteur (100) selon la revendication 1,
dans lequel le contrepoids (130) comprend un corps (158) présentant une surface intérieure qui définit un volume interne, et le corps (158) présente une surface extérieure (160) qui définit un évidement (162).

13. Motoculteur (100) selon la revendication 1,
dans lequel le contrepoids (130) comprend le dispositif de stockage d'énergie (178).

14. Motoculteur (100) selon l'une des revendications 1 à 13,
comprenant en outre un mancheron (104) qui s'étend à partir d'un corps (102) du motoculteur (100), le mancheron (104) comprenant un ou plusieurs éléments de commande (194) conçus pour commander le motoculteur (100).
